# EUROPÄISCHE PATENTSCHRIFT

(11) **EP 3 400 775 B1**
(45) Veröffentlichungstag und Bekanntmachung des Hinweises auf die Patenterteilung: **20.01.2021**
(21) Anmeldenummer: 18167911.9
(22) Anmeldetag: 18.04.2018
(51) Int. Cl.: A01C 3/00, B01D 11/02, C12P 7/56

(54) **VORRICHTUNG ZUR GEWINNUNG VON MILCHSÄURE AUS SILIERTER BIOMASSE UND VERFAHREN ZUM BEHANDELN VON SILAGE**
DEVICE FOR RECOVERING LACTIC ACID FROM SILAGE BIOMASS AND METHOD FOR TREATING SILAGE
DISPOSITIF PERMETTANT L'OBTENTION DE L'ACIDE LACTIQUE À PARTIR DE BIOMASSE ENSILLÉE ET PROCÉDÉ DE TRAITEMENT DE L'ENSILAGE

(30) Priorität: 09.05.2017 DE 102017109981
(43) Veröffentlichungstag der Anmeldung: 14.11.2018
(73) Patentinhaber: getproject GmbH & Co. KG, 24103 Kiel (DE)
(72) Erfinder: Götz, Johann, 24105 Kiel (DE)
(74) Vertreter: Lobemeier, Martin Landolf

(56) Entgegenhaltungen:
- WO-A1-2011/035762
- DE-A1-102009 030 618
- US-A- 4 857 279
- US-A- 5 250 182

## Beschreibung

Die Erfindung betrifft eine Vorrichtung zur Gewinnung von Milchsäure aus silierter (also vergorener) Biomasse. Die Erfindung betrifft darüber hinaus auch ein Verfahren zum Behandeln von Silage und deren Verwertung.

Bei der Ausbringung von Gülle und Gärresten aus Biogasanlagen als Dünger kommt es zu ganz erheblichen Emissionen von Ammoniak, die mit dem Niederschlag zur Überdüngung und Versauerung von Wäldern, Flüssen, Seen und Naturschutzflächen und zur Nitratbelastung des Grundwassers und damit zur Belastung des Trinkwassers führen.

Gleichzeitig geht der Landwirtschaft durch diese Form der Umverteilung eine erhebliche Menge an Stickstoff als Dünger verloren. Dieser Verlust wird allein für Deutschland mit ca. 500 Mio. € p. a. beziffert.

Beim biologischen Abbau von organischen Stickstoffverbindungen (z.B. Eiweiß) entstehen die anorganischen Stickstoffverbindungen Ammonium und Ammoniak, die in einem Gleichgewicht zueinander stehen:

NH₄⁺ + OH⁻ ↔ NH₃ · H₂O

Ammonium (ungiftig) ↔ Ammoniak (giftig)

Dieses Gleichgewicht ist vom pH-Wert und von der Temperatur abhängig. Bei einem Anstieg von pH-Wert und Temperatur verschiebt sich der Schwerpunkt zum giftigen Ammoniak. Bei beispielsweise pH 7 beträgt das Verhältnis Ammonium : Ammoniak 99 : 1. Bei einer Erhöhung auf pH 9 verändert sich das Verhältnis auf 70:30. Je höher also der pH-Wert bei der Ausbringung von Gülle und Gärresten aus Biogasanlagen, desto mehr Ammoniak geht in die Atmosphäre über. Solange diese daher nicht in den Boden eingearbeitet werden, wird bei den typischen pH-Werten Ammoniak bis zum vollständigen Verbrauch des Ammoniums nachgebildet.

Nach Angaben des Umweltbundesamts (UBA) betrugen in 2015 in Deutschland die Stickstoff-Emissionen 1.568.000 t/a. Davon sind 980.000 t/a der Landwirtschaft zuzurechnen. 435.000 t/a davon gelangten ins Grundwasser, 424.000 t/a in die Atmosphäre.

Im Interesse einer umweltschonenden Landwirtschaft wird daher bereits an effizienteren Verfahren zur Ausbringung von Gülle und Gärresten gearbeitet. Nach Angaben der Landwirtschaftskammer Schleswig-Holstein betragen die N-Verluste, abhängig vom Wetter und der Zeit bis zur Einarbeitung in den Boden, für die zur Anwendung kommenden Verfahren bei:

| | |
|---|---|
| konventionellen Prallteller | 90% |
| Schleppschlauch | 70% |
| Schleppschuh | 40% |
| Schlitzverfahren | 10% |

Der Einsatz des Pralltellers ist inzwischen nicht mehr zulässig. Für den Einsatz des Schleppschuh- und Schlitzverfahrens gibt es von der Fruchtart abhängige Restriktionen. Hierzu gibt es eine Vielzahl von Veröffentlichungen. Beispielhaft sei auf die Veröffentlichung "Wege zur Reduzierung von Ammoniakverlusten bei der Ausbringung von Gülle und Biogasgärresten" des Kuratoriums für Technik u. Bauwesen i. d. Landwirtschaft e.V. (KTBL) hingewiesen.

Ein anderer Ansatz zur Reduzierung der Ammoniak-Emissionen ist die Absenkung des pH-Wertes. Bei pH-Werten unter 6 ist die Gleichgewichtsreaktion so weit in Richtung Ammonium verschoben, dass kein Ammoniak mehr gebildet wird. Insbesondere sind Versuche mit Schwefelsäure bekannt, die als Abfallprodukt in der Industrie anfällt.

Ein umweltverträglicheres Verfahren, bei dem statt der Verwendung von Schwefelsäure eine umweltverträgliche organische Säure, nämlich Milchsäure zu Einsatz kommt, ist bereits aus der DE 41 39 682 A1 von Prof. Konrad Scheffer von der Universität Kassel bekannt.

Milchsäure fällt in der Landwirtschaft in großen Mengen bei der feuchten Konservierung von Biomassen an. Das zu konservierendes Pflanzenmaterial wird hierfür verdichtet und luftdicht abgeschlossen gelagert. Durch den Sauerstoffmangel werden pflanzeneigene Enzyme sowie aerobe und fakultativ anaerobe Mikroorganismen (Bakterien, Hefen, Schimmelpilze) unterdrückt. Die Milchsäurebakterien dagegen wandeln Zucker in Säuren um (vor allem Milchsäure), wodurch der pH-Wert typischerweise auf 4,5 bis 4,0 ab fällt. Dies führt wiederum dazu, dass weitere gärschädliche Bakterien am Wachstum gehindert werden (Coli-Aeorogenes-Gruppe, Listerien und Clostridien).

Dr. Gregor Rinke hat im Rahmen seiner Doktorarbeit "Verminderung von Ammoniakemissionen aus Gülle durch die Zumischung von milchsäurehaltigem Restwasser aus der mechanischen Entwässerung feuchtkonservierter Biomasse als regenerativer Energieträger" (1999, Universität Kassel) nachgewiesen, dass Milchsäure wegen deren Puffereigenschaften besser geeignet ist für die Absenkung des pH-Wertes von Gülle und Gärresten als Schwefelsäure. Versuche haben gezeigt, dass bei der Ausbringung von Gülle durch Zugabe von milchsäurehaltigem Presssaft aus feuchtkonservierter Biomasse, im folgenden Silage genannt, im Verhältnis 1:3 die Wiederfindungsrate von Nitrat (NH₄-N) im Boden von 53 % bis zu 85 % erhöht und damit Stickstoffemission kalkulatorisch um 67 % vermindert werden.

Bei den hierzu durchgeführten Versuchen wurde ein milchsäurehaltiger Presssaft durch mechanische Entwässerung der Silagen mittels einer Schneckenpresse gewonnen. Bei einer Erhöhung des Gehaltes an Trockensubstanz der Silage von üblichen 20 bis 30 % auf die mit Schneckenpressen üblicherweise erreichbaren 40 % bis 50 % beträgt die Ausbeute an Milchsäure allerdings im Mittel lediglich ca. 20 % In US 4 857 279 A1 wird eine Vorrichtung zur Extraktion und in WO 2011/035762 A1 eine Walzenpresse von Biomasse vorgeschlagen.

Aufgabe der Erfindung ist es daher eine Vorrichtung oder ein Verfahren bereitzustellen, mit denen die Ausbeute von aus Silage gewonnener Milchsäure erhöht und die vorhandene Milchsäure effizient eingesetzt werden kann.

Diese Aufgabe wird erfindungsgemäß durch die Vorrichtung mit den Merkmalen von Anspruch 1 gelöst. Die Aufgabe wird auch durch das Verfahren mit den Merkmalen von Anspruch 8 gelöst. Die Unteransprüche geben jeweils vorteilhafte Ausgestaltungen der Erfindung wieder.

Grundgedanke der Erfindung ist es, Milchsäure in Form einer wässerigen Lösung durch eine Gegenstrom-Wäsche zu gewinnen, wobei nach einer bevorzugten Ausgestaltung die Silage anschließend mechanisch entwässert wird. Der bei der Entwässerung der entsäuerten Silage anfallende Presssaft soll dabei insbesondere für die Extraktion der Milchsäure in dem Gegenstrom-Wäscher eingesetzt werden. Bei der Wäsche ist eine Milchsäureausbeute bis zu 50 % zu erwarten und bei der anschließenden Entwässerung nochmals ca. 10 %.

Die eingesetzten Biomassen haben abhängig von Art und Herkunft üblicherweise einen Aschegehalt von 10 bis 25 % bezogen auf die Trockenmasse, davon bis zu 10 % Sand und Steine. Abgesehen davon, dass Sand und Steine zu Störungen des Anlagenbetriebes und einem erhöhtem Verschleiß von Anlagenkomponenten führen, sind sie auch bei der Verwertung der Biomasse unerwünscht.

Der Sand mit seinem hohen Feinanteil haftet an der feuchten Silage. Deshalb scheidet ein trockenes Verfahren für dessen Abtrennung aus.

Eine Alternative wäre eine Sedimentation von Sand und Steinen mit Unterstützung durch Rührwerke in einem Wasserbad. Solche Wäscher sind dafür jedoch nur bedingt geeignet, weil sich die halmartige Silage an den Rührorganen anlagert und zu Verstopfungen führt. Problematisch ist außerdem, dass größere Anteile der Silage sedimentieren. Die Trennung von Sand und Silage gestaltet sich dadurch schwierig.

Vorgeschlagen wird deshalb ein Wäscher, bei dem die Silage mit geringer Schichtdicke über einen Siebboden bewegt und zum Auswaschen von Sand und Milchsäure mit Wasser durchspült wird. Es wird ein Aschegehalt von weniger als 6 % nach der Entwässerung angestrebt. Zur Abscheidung von Steinen soll der Wäscher mit einem Steinfang ausgerüstet werden.

Entsäuerte Mais- und Grassilage kann vorteilhaft als Futtermittel eingesetzt werden. Weil Wiederkäuer nur eine begrenzte Menge Milchsäure pro Zeiteinheit verdauen können, ist ein hoher Gehalt an Milchsäure im Futtermittel unerwünscht. Daher werden bevorzugt frühe Maissorten angebaut, weil sie mit höheren Trockensubstanzgehalten geerntet werden können und dadurch nach der Silierung geringere Gehalte an Milchsäure aufweisen. Durch eine Entsäuerung der Silage würde sich die Verwendung von ertragreicheren späten Sorten anbieten, mit den daraus resultierenden ökonomischen Vorteilen. Dabei muss die entsäuerte Biomasse nur soweit entwässert werden wie es für Lagerung und Transport notwendig ist, weil die Tiere ohnehin einen Bedarf an Wasser haben.

Vorgeschlagen wird hiermit ein Verfahren zur kombinierten Nutzung von milchsäurehaltiger silierter halmartiger Biomasse, der sogenannten Silage. Die Milchsäure soll mit einem neuartigen Wäscher im Gegenstrom von der Silage getrennt werden. Die so gewonnene wässerige Milchsäurelösung kann zur pH-Absenkung von Gülle und Gärresten bei deren Ausbringung eingesetzt werden und so zur Minderung der Ammoniak-Emissionen beitragen.

Alternativ kann aus der Milchsäurelösung auch Ammoniak gewonnen und Milchsäure isoliert werden.

Die entsäuerte Silage ist nach einer Entwässerung bis zur Lager- und Transportfähigkeit ein säurearmes Futter für Wiederkäuer. Weil in der Regel nur ein saisonaler Bedarf an silierten Futtermitteln besteht und eine Anlage mit dessen Aufbereitung kaum ausgelastet werden kann, wird aus ökonomischen Gründen ein Verfahren vorgeschlagen, bei dem die entsäuerte Silage nach einer weitergehenden mechanischen Entwässerung, einer Trocknung und Pelletierung als Brennstoff eingesetzt oder zu Rohstoff für die Gewinnung von Wertstoffen aufgearbeitet werden.

Für die thermisch und stofflich Verwertung sollen vorzugsweise halmartige Biomassen eingesetzt werden, die sonst kaum Verwendung finden, wie zum Beispiel Landschaftspflegematerial und Grünschnitt aus der Pflege von Parks und Gärten. Durch Entwässerung, Trocknung und Pelletierung können daraus normgerechte Brennstoffe hergestellt werden. Alternativ kann das Pressgut zu Ausgangsstoffen aufbereitet werden, die für die Gewinnung von Wertstoffen mittels physikalischer oder chemischer Verfahren geeignet sind.

Für die thermische und stoffliche Verwertung wird eine mechanische Entwässerung vorgeschlagen, bei der die Zellstruktur der Pflanzen zerstört wird, so dass Pflanzeninhaltsstoffe zusammen mit der ausgepressten Flüssigkeit ausgetragen werden. Alternativ kann der Entwässerung eine hierfür geeignete Vorrichtung vorgeschaltet werden.

Die in dem anfallenden Presssaft enthaltenen Feststoffe sollen zu einem hochwertigen stärkehaltigen Futtermittel verarbeitet werden.

Es wird speziell vorgeschlagen, die bei der Vorentwässerung anfallende Flüssigkeit und die bei der Gewinnung von stärkehaltigem Futtermittel aus dem Presssaft anfallende flüssige Phase als Waschmedium für das Auswaschen von Milchsäure und Sand zu verwenden. Der Silage wird in dem Wäscher die Menge an Milchsäure entzogen, wie sie dem Waschmedium im Gegenstrom wieder zugeführt wird. Für die Stabilisierung des Prozesses und das Anfahren der Anlage werden kleinere Mengen an Frischwasser benötigt. Dafür kann auch Regenwasser oder geeignetes Prozesswasser verwendet werden, soweit verfügbar.

Erfindungsgemäß ist also eine Vorrichtung zur Gewinnung von Milchsäure aus Silage vorgesehen, die folgende Merkmal aufweist: einen wasserdurchlässigen Boden, einen dem Boden Silage zuführenden Zulauf und einem vom Boden Silage abführenden Ablauf, wenigstens eine Transporteinrichtung zum Transport der Silage auf bzw. über den Boden vom Zulauf zum Ablauf, eine Mehrzahl von unterhalb des Bodens zwischen dem Zulauf und dem Ablauf hintereinander angeordneten, jeweils mittels eines Überlaufs miteinander kommunizierenden Auffangbehältern mit einer den Auffangbehältern ein Waschmedium zuführenden Zuleitung und einer aus den Auffangbehältern mit Milchsäure angereichertes Waschmedium abführenden Ableitung, wobei die Zuleitung mit einem im Bereich des Ablaufs angeordneten Auffangbehälter und die Ableitung mit einem im Bereich des Zulaufs angeordneten Auffangbehälter verbunden ist, und eine Mehrzahl von zwischen dem Zulauf und dem Ablauf oberhalb des Bodens angeordneten Sprüheinrichtungen, wobei wenigstens eine in Bezug auf den Fluss der Silage stromaufwärts angeordnete Sprüheinrichtung mit einem stromaufwärts angeordneten Auffangbehälter und wenigstens eine stromabwärts angeordnete Sprüheinrichtung mit einem stromabwärts angeordneten Auffangbehälter mittels jeweils einer Pumpe kommunizierend verbunden ist.

Der Boden kann dabei feststehend, bevorzugt als Bestandteil eines Tisches oder einer Wanne und insbesondere als Spaltsieb ausgebildet.

Die das vom Boden herabtropfenden Waschmedium auffangenden Auffangbehälter sind bevorzugt trichterförmig ausgebildet. Besonders bevorzugt weisen die Auffangbehälter im Bereich ihres Bodens eine Entnahmestelle auf.

Die Verbindung der Auffangbehälter untereinander ist insbesondere als im oberen Bereich der Behälter angeordneter Überlauf ausgebildet.

Die Vorrichtung weist weiter bevorzugt einen sich vertikal vom Boden nach unten erstreckenden Steinfang auf, der zum Erzeugen eines ein Absinken von Steinen erlaubenden und ein Absinken von Biomasse verhindernden Auftriebs mittels einer weiteren Pumpe mit einem der Auffangbehälter, der das entsprechende Spülmedium bereitstellt, verbunden ist.

Die für die Zuführung der Biomasse zu dem Boden verwendete Transporteinrichtung ist bevorzugt als rotierender Rechen mit stabförmigen Mitnehmern ausgebildet. Die Mitnehmer ragen durch die Schlitze eines Leitblechs und transportieren die Biomasse durch einen düsenartigen Auslauf dosiert auf den Boden. Für den Weitertransport auf dem Boden ist bevorzugt eine durch eine Reihe von Schaufeln ausgebildete Transporteinrichtung vorgesehen.

Schließlich ist ein Verfahren zum Behandeln von Silage unter Verwendung obengenannter Vorrichtung vorgesehen mit den Schritten:
Behandeln von Milchsäure enthaltender Silage mit einem Waschmedium unter Auswaschen der Milchsäure, Auffangen des Milchsäure enthaltenden Waschmediums, Auspressen der Milchsäure-depletierten Silage und Auffangen des Presssafts, und Verwenden des Presssafts als Waschmedium.
Die ausgepresste Milchsäure-depletierte Silage eignet sich insbesondere zur Verwendung als Futtermittel oder Brennstoff.

Die Erfindung wird im Folgenden anhand eines in den beigefügten Zeichnungen dargestellten, besonders bevorzugt ausgestalteten Ausführungsbeispiels näher erläutert. Es zeigen:
- Fig. 1: einen Wäscher zur Abscheidung von Sand und Milchsäure aus halmartiger Silage; und
- Fig. 2: eine schematische Darstellung des Verfahrens zur Gewinnung einer wässerigen Milchsäurelösung aus silierter Biomasse, kombiniert mit der Herstellung von entsäuerten Futtermitteln, der thermischen und/oder der stofflichen Verwertung von festen und flüssigen Anteilen der Biomasse.

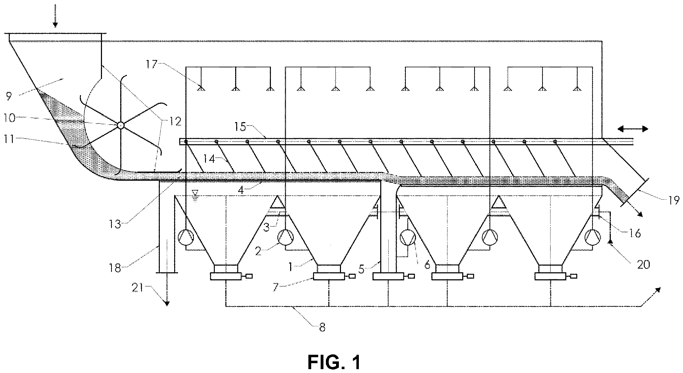

Fig. 1 zeigt einen Wäscher zur Abscheidung von Sand und Milchsäure aus halmartiger Silage.

Der Wäscher ist zur Anpassung an die jeweiligen Anforderungen modulartig konzipiert. In der Zeichnung 1 sind beispielhaft vier Module dargestellt. Jedes Modul besteht aus einem trichterförmigen Auffangbehälter 1 für das Waschmedium, einer Umwälzpumpe 2 und einem Überlauf 3. Sie sind mit den Spaltsieben 4 abgedeckt. Am Ende der für die Sandabscheidung vorgesehenen Zone befindet sich der Steinfang 5. Die Umwälzpumpe 6 erzeugt darin eine aufwärtsgerichtete Strömung, deren Geschwindigkeit so bemessen ist, dass Steine und größere Sandkörner nach unten sinken, die Biomasse aber aufschwimmt und von dem Wasserstrom zur nachfolgenden Modul befördert wird. Die Unterteile 1 und der Sandfang 4 sind mit Absperrorganen 7 versehen, die mit einer gemeinsamen Fördereinrichtung 8 für den Sand und die Steine verbunden sind. Die Absperrorgane werden abwechselnd für den Sandaustrag geöffnet.

Die Silage wird über den Einlaufstutzen 9 dem Wäscher durch eine der Breite des Wäschers entsprechende Dosiereinrichtung zugeführt. Diese besteht aus einer Welle 10 mit den stabförmigen Mitnehmern 11 und der geschlitzten Leitblech 12. Die Silage wird von den Mitnehmern 11 in das erste Wäschermodul befördert. Die Mitnehmer 11 sind so geformt, dass anhaftende Silage an dem Leitblech 12 abgestreift wird. Durch das Leitblech 12 bildet die Silage eine Schicht 13 mit definierter Stärke auf dem Spaltsieb 4. Von den schaufelförmigen Mitnehmern 14 wird die Silage durch den Wäscher transportiert. Die Mitnehmer 14 sind vorzugsweise beweglich an gemeinsamen Führungsstangen 16 befestigt, die Vor- und Rückwärtsbewegungen machen. Bei der Vorwärtsbewegung graben sich die Mitnehmer 14 in die Silage ein und schieben sie weiter. Dabei wird die Silage 13 an das Spaltsieb 4 angepresst, das Spaltsieb 4 gereinigt und auf dem Spaltsieb 4 liegenden Steine und groben Sandkörner zum Steinfang 5 transportiert werden. Bei der Rückwärtsbewegung werden die Mitnehmer von der sich auf den Spaltsieben befindliche Silage 13 angehoben und graben sich bei der nächsten Vorwärtsbewegung wieder ein. Die Zuteilung durch die Mitnehmer 11 erfolgt periodisch im Rhythmus der Bewegung der Mitnehmer 14.

Das Waschmedium 20 wird dem Wäscher über den Anschlussstutzen 16 zugeführt. Es wird im Gegenstrom zur Silage über die Überläufe 3 durch die einzelnen Module des Wäschers geführt. Das Auswaschen von Sand und Milchsäure erfolgt durch Umwälzung des Waschmediums mit den Pumpen 2 über die Düsen 17 in den einzelnen Modulen. Die wässerige Milchsäurelösung 21 wird über den Ablauf 18 und die entsäuerte Silage über Stutzen 19 ausgetragen.

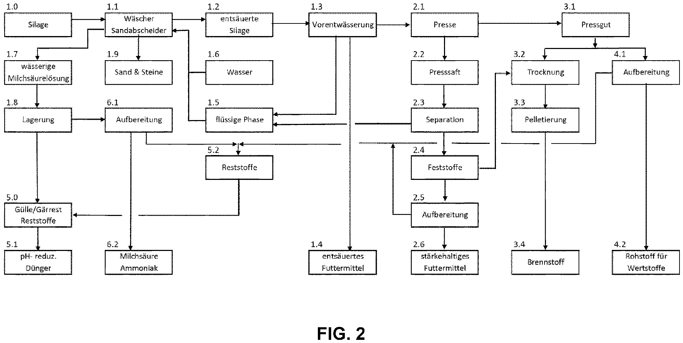

Fig. 2 zeigt eine schematische Darstellung des Verfahrens zur Gewinnung einer wässerigen Milchsäurelösung aus silierter Biomasse, kombiniert mit der Herstellung von entsäuerten Futtermitteln, der thermischen und/oder der stofflichen Verwertung von festen und flüssigen Anteilen der Biomasse.

In dem Wäscher 1.1 werden milchsäurehaltige Silage 1.0 mit den Waschmedien 1.5 und 1.6 in der Form in einem kontinuierlichen Prozess im Gegenstrom perkoliert, das die Milchsäure ausgewaschen wird und Sand und Steine ausgespült werden. Die wässerige Milchsäurelösung 1.7 wird in Behälter 1.8 gelagert und bei Bedarf der Gülle und den Gärresten 5.1 zur pH-Anhebung zugesetzt. Alternativ kann aus der Milchsäurelösung 1.7 auch Milchsäure und Ammoniak gewonnen werden.

Entsäuerte Mais- oder Grassilagen können als Futter 1.4 für Wiederkäuer verwertet werden. Dafür wird der Wassergehalt der entsäuerten Silage 1.2 in der Vorentwässerung 1.3 soweit reduziert, bis das Futter transport- und lagerfähig ist. Die bei der Vorentwässerung 1.3 anfallende flüssige Phase 1.5 wird, gegebenenfalls um Wasser 1.6 ergänzt, als Waschmedium im dem Wäscher 1.1 eingesetzt. Sand und Steine werden für eine spätere Verwertung oder Entsorgung in Behälter 1.9 gesammelt.

Für den Fall einer thermischen und stofflichen Verwertung der Biomassen wird die entsäuerte Silage 1.2 in der Presse 2.1 weiter entwässert. Dabei wird die Zellstruktur der Pflanzen weitgehend zerstört, dass Pflanzeninhaltsstoffe zusammen mit dem Presssaft 2.2 ausgetragen werden können. Das anfallende Pressgut 3.1 wird nach der Trocknung 3.2 durch Pelletierung 3.3 zu Brennstoff 3.4 verarbeitet. Alternativ kann das Pressgut 3.1 nach einer Aufbereitung 4.1 zu einem Ausgangsmaterial 4.2 verarbeitet, das geeignet ist, mittels chemischer und/oder physikalischer Verfahren Wertstoffen zu gewinnen.

Der Presssaft 2.2 enthält lösliche und feste Pflanzeninhaltsstoffe. In dem Separator 2.3 werden die in dem Presssaft 2.2 enthaltenen stärkehaltigen Feststoffen 2.4 von der flüssige Phase 1.5 getrennt. Diese Feststoffe 2.4 werden wahlweise zu einem hochwertigen Futtermittel 2.6 verarbeitet oder zusammen mit dem Pressgut 3.1 zu Brennstoff 3.4. Die flüssige Phase 2.1 wird als Waschmedium im Wäscher 1.1 eingesetzt.

Reststoffe aus der Aufbereitung 2.5, 4.1 und 6.1 und werden zusammen der Gülle bzw. dem Gärrest 5.0 als Dünger verwertet.

## Patentansprüche

1. Vorrichtung zur Gewinnung von Milchsäure aus silierter Biomasse,
mit
- einem wasserdurchlässigen Boden (4),
- einem dem Boden (4) silierte Biomasse zuführenden Zulauf (9) und einem vom Boden (4) silierte Biomasse abführenden Ablauf (19),
- wenigstens einer Transporteinrichtung (10, 11, 14, 15) zum Transport der silierten Biomasse vom Zulauf (9) zum Ablauf (19),
- einer Mehrzahl von unterhalb des Bodens (4) zwischen dem Zulauf (9) und dem Ablauf (9) hintereinander angeordneten, jeweils mittels eines Überlaufs (3) miteinander kommunizierend verbundenen Auffangbehältern (1) mit einer den Auffangbehältern (1) ein Waschmedium (20) zuführenden Zuleitung (16) und einer aus den Auffangbehältern (1) mit Milchsäure angereichertes Waschmedium (21) abführenden Ableitung (21), wobei die Zuleitung (16) mit einem im Bereich des Ablaufs (19) angeordneten Auffangbehälter (1) und die Ableitung (21) mit einem im Bereich des Zulaufs (9) angeordneten Auffangbehälter verbunden ist, und
- einer Mehrzahl von zwischen dem Zulauf (9) und dem Ablauf (19) oberhalb des Bodens (4) angeordneten Sprüheinrichtungen (17), wobei wenigstens eine stromaufwärts angeordnete Sprüheinrichtung (17) mit einem stromaufwärts angeordneten Auffangbehälter (1) und wenigstens eine stromabwärts angeordnete Sprüheinrichtung (17) mit einem stromabwärts angeordneten Auffangbehälter (1) mittels jeweils einer Pumpe (2) kommunizierend verbunden ist.

2. Vorrichtung nach Anspruch 1, **dadurch gekennzeichnet, dass** der Boden (4) als Sieb ausgebildet ist.

3. Vorrichtung nach einem der vorhergehenden Ansprüche, **dadurch gekennzeichnet, dass** die Auffangbehälter (1) trichterförmig ausgebildet sind.

4. Vorrichtung nach einem der vorhergehenden Ansprüche, **dadurch gekennzeichnet, dass** die Auffangbehälter (1) im Bereich ihres Bodens eine Entnahmestelle (7) aufweisen.

5. Vorrichtung nach einem der vorhergehenden Ansprüche, **gekennzeichnet durch** einen sich vertikal vom Boden (4) erstreckenden Steinfang (5), der zum Erzeugen eines ein Absinken von Steinen erlaubenden und ein Absinken von Biomasse verhindernden Auftriebs mittels einer weiteren Pumpe (6) mit einem Auffangbehälter (1) verbunden ist.

6. Vorrichtung nach einem der vorhergehenden Ansprüche, **dadurch gekennzeichnet, dass** wenigstens eine Transporteinrichtung (10, 11) ein Rechen mit stabförmigen Mitnehmern ist.

7. Vorrichtung nach einem der vorhergehenden Ansprüche, **dadurch gekennzeichnet, dass** die Transporteinrichtung (14, 15) mit schaufelförmigen Mitnehmern versehen ist.

8. Verfahren zum Behandeln von Silage unter Verwendung der Vorrichtung gemäß einem der vorhergehenden Ansprüche, **gekennzeichnet durch** die Schritte:
- Behandeln von Milchsäure enthaltender Silage mit einem Waschmedium unter Auswaschen der Milchsäure,
- Auffangen des Milchsäure enthaltenden Waschmediums,
- Auspressen der Milchsäure-depletierten Silage und Auffangen des Presssafts, und
- Verwenden des Presssafts als Waschmedium.

## Claims

1. A device for obtaining lactic acid from ensiled biomass,
comprising
- a water-permeable floor (4),
- an inlet (9) that feeds ensiled biomass onto the floor (4) and an outlet (19) that discharges ensiled biomass from the floor (4),
- at least one transport device (10, 11, 14, 15) for transporting the ensiled biomass from the inlet (9) to the outlet (19),
- a plurality of collecting vessels (1) that are arranged one behind the other beneath the floor (4) between the inlet (9) and the outlet (9) and are each connected in a communicating manner to one another by means of an overflow (3), the connecting vessels having a supply line (16) that feeds a washing medium (20) to the collecting vessels (1) and a discharge line (21) that discharges washing medium (21) enriched with lactic acid from the collecting vessels (1), wherein the supply line (16) is connected to a collecting vessel (1) arranged in the region of the outlet (19) and the discharge line (21) is connected to a collecting vessel arranged in the region of the inlet (9), and
- a plurality of spray devices (17) that are arranged between the inlet (9) and the outlet (19) above the floor (4), wherein at least one upstream spray device (17) is connected in a communicating manner to an upstream collecting vessel (1) and at least one downstream spray device (17) is connected in a communicating manner to a downstream collecting vessel (1), in each case by means of a pump (2).

2. The device according to claim 1, **characterized in that** the floor (4) is embodied as a screen.

3. The device according to any of the preceding claims, **characterized in that** the collecting vessels (1) are funnel-shaped.

4. The device according to any of the preceding claims, **characterized in that** the collecting vessels (1) have an extraction point (7) in the region of their bottom.

5. The device according to any of the preceding claims, **characterized by** a stone trap (5) that extends vertically from the floor (4) and is connected by means of an additional pump (6) to a collecting vessel (1) in order to generate a buoyancy that allows stones to sink and prevents biomass from sinking.

6. The device according to any of the preceding claims, **characterized in that** at least one transport device (10, 11) is a rake having rod-shaped catches.

7. The device according to any of the preceding claims, **characterized in that** the transport device (14, 15) is provided with shovel-shaped catches.

8. A method for treating silage using the device according to any of the preceding claims, **characterized by** the steps:
- treating silage containing lactic acid with a washing medium to wash out the lactic acid,
- collecting the washing medium containing lactic acid,
- pressing the lactic acid-depleted silage and collecting the extract, and
- using the extract as a washing medium.

## Revendications

1. Dispositif d'obtention d'acide lactique à partir de biomasse ensilée,
comportant
- un fond perméable à l'eau (4),
- une amenée (9) alimentant la biomasse ensilée du fond (4) et une décharge (19) évacuant la biomasse ensilée du fond (4),
- au moins un dispositif de transport (10, 11, 14, 15) destiné à transporter la biomasse ensilée de l'amenée (9) à la décharge (19),
- une pluralité de récipients de collecte (1) disposés en série sous le fond (4) entre l'amenée (9) et la décharge (9) et reliés chacun en communication au moyen d'un trop-plein (3), avec une conduite d'alimentation (16) amenant un milieu de lavage (20) aux récipients de collecte (1) et avec une conduite d'évacuation (21) évacuant le milieu de lavage (21) enrichi d'acide lactique provenant des récipients de collecte (1), dans lequel la conduite d'alimentation (16) est reliée à un récipient de collecte (1) disposé dans la zone de la décharge (19) et la conduite d'évacuation (21) est reliée à un récipient de collecte disposé au niveau de l'amenée (9), et
- une pluralité de dispositifs de pulvérisation (17) disposés entre l'amenée (9) et la décharge (19) au-dessus du fond (4), dans lequel au moins un dispositif de pulvérisation amont (17) est relié en communication avec un récipient de collecte amont (1) et au moins un dispositif de pulvérisation aval (17) est relié en communication avec un récipient de collecte aval (1) au moyen d'une pompe (2) respective.

2. Dispositif selon la revendication 1, **caractérisé en ce que** le fond (4) est réalisé sous forme de tamis.

3. Dispositif selon l'une des revendications précédentes, **caractérisé en ce que** les récipients de collecte (1) sont en forme d'entonnoir.

4. Dispositif selon l'une des revendications précédentes, **caractérisé en ce que** les récipients de collecte (1) présentent un point de prélèvement (7) au niveau de leur fond.

5. Dispositif selon l'une des revendications précédentes, **caractérisé par** un piège à pierres (5) s'étendant verticalement depuis le fond (4) qui est relié à un récipient de collecte (1) au moyen d'une autre pompe (6) pour produire une flottabilité qui permet aux pierres de s'enfoncer et empêche la biomasse de s'enfoncer.

6. Dispositif selon l'une des revendications précédentes, **caractérisé en ce qu'**au moins un dispositif de transport (10, 11) est un râteau comportant des éléments d'entraînement en forme de tige.

7. Dispositif selon l'une des revendications précédentes, **caractérisé en ce que** le dispositif de transport (14, 15) est pourvu d'éléments d'entraînement en forme d'aube.

8. Procédé de traitement de l'ensilage utilisant le dispositif selon l'une des revendications précédentes, **caractérisé par** les étapes :
- de traitement de l'ensilage contenant de l'acide lactique à l'aide d'un milieu de lavage pour éliminer l'acide lactique,
- de collecte du milieu de lavage contenant de l'acide lactique,
- de pressage de l'ensilage appauvri en acide lactique et de collecte du jus pressé, et
- d'utilisation du jus pressé comme milieu de lavage.
